# FASCICULE DE BREVET EUROPEEN

(11) **EP 1 986 980 B1**
(45) Date de publication et mention de la délivrance du brevet: **21.06.2017**
(21) Numéro de dépôt: 07731537.2
(22) Date de dépôt: 30.01.2007
(51) Int. Cl.: C04B 41/81, C04B 38/10, C04B 35/565

(54) **MOUSSE CERAMIQUE EN CARBURE DE SILICIUM RECRISTALLISE IMPREGNEE**
IMPRÄGNIERTER KERAMIKSCHAUMSTOFF, DER AUS UMKRISTALLISIERTEM SILIZIUMKARBID HERGESTELLT IST
IMPREGNATED CERAMIC FOAM MADE OF RECRYSTALLIZED SILICON CARBIDE

(30) Priorité: 01.02.2006 FR 0600942
(43) Date de publication de la demande: 05.11.2008
(73) Titulaire: Saint-Gobain Centre de Recherches et d'Etudes Européen, 92400 Courbevoie (FR)
(72) Inventeur: HIS, Christian, Claude, F-84300 Cavaillon (FR); VILLERMAUX, Franceline, F-84000 Avignon (FR); RAFFIN, Nicolas, F-84250 Le Thor (FR); DUSSAULX, Michel, D-96472 Roedental (DE)
(74) Mandataire: Nony
(86) Numéro de dépôt international: PCT/FR2007/050709
(87) Numéro de publication internationale: WO 2007/088306

(56) Documents cités:
- DE-A1- 10 013 378

## Description

L'invention se rapporte à une pièce céramique poreuse comportant une mousse céramique poreuse imprégnée, à un procédé d'obtention d'une telle pièce et à des utilisations d'une telle pièce.

Les mousses céramiques poreuses sont des produits poreux connus caractérisés par une faible densité (5 à 50% de la densité théorique). Elles peuvent être constituées à partir de la grande majorité des poudres céramiques, en particulier l'alumine, le carbure de silicium, la zircone....

DE 100 13 378 décrit une céramique poreuse qui peut être utilisée comme filtre, support de catalyseur, échangeur de chaleur ou absorbeur de chocs.

Il existe plusieurs procédés de fabrication permettant d'obtenir des mousses céramiques poreuses.

Le plus simple de ces procédés comprend l'addition d'un agent porogène dans une barbotine céramique ou un mélange à presser. Le tout est mis en forme puis subit un cycle de cuisson qui permet de brûler l'agent porogène. En brûlant, l'agent porogène laisse place à une porosité. Ce procédé est décrit par exemple dans le brevet EP 1 140 731 B1. Il présente l'inconvénient de conduire à un dégagement gazeux (éventuellement toxique) dû à la pyrolyse de l'agent porogène. Par ailleurs, il est difficile de fabriquer des pièces épaisses, car le dégagement gazeux est alors difficile à effectuer (il faut pouvoir évacuer le gaz de manière homogène).

Une autre technique est la réplication d'une mousse en polymère, polyuréthane par exemple. Cette mousse est recouverte d'une barbotine céramique. Le tout subit ensuite un cycle de cuisson qui permet de brûler la mousse polyuréthane et de fritter la mousse céramique dont la structure est induite par la mousse polyuréthane de départ. Ce procédé est décrit par exemple dans le brevet US 4,024,212. On retrouve les inconvénients liés au dégagement gazeux (en brûlant, le polyuréthane dégage des gaz à liaison C-N qui sont dangereux). Par ailleurs, il est difficile de réaliser des pièces avec des pores de dimensions inférieures à 200µm.

Une technique alternative est la création de porosités par la formation de gaz par réaction chimique entre différents additifs d'une barbotine de céramique. Ce procédé est décrit par exemple dans les brevets US 5,643,512 ou US 5,705,448. Là encore, on retrouve les inconvénients liés au dégagement de gaz. De plus, il faut associer à ce procédé une technique de consolidation de la mousse.

Une technique consiste à introduire mécaniquement un gaz dans une barbotine par brassage. Là encore, il faut combiner ce procédé avec une technique de consolidation de la mousse obtenue de manière à éviter la coalescence des bulles ou le drainage de la phase liquide.

Parmi les techniques de consolidation de mousse pouvant être utilisées pour la mise en oeuvre des deux dernières techniques mentionnées ci-dessus, il existe aussi plusieurs possibilités.

Une première solution consiste à mélanger des monomères polymérisables à la barbotine céramique. Dans des conditions particulières, la polymérisation des monomères entraîne la consolidation de la mousse. Ce procédé est décrit par exemple dans le brevet EP 759 020 B1. Par contre, le coût élevé des monomères utilisables ainsi que la difficulté de maîtriser les conditions de polymérisation ont empêché cette technique de se développer de manière industrielle.

Une deuxième solution consiste à réticuler des polymères dans une barbotine céramique. Comme pour la technique précédente, cette réticulation entraîne la consolidation de la mousse. Ce procédé est décrit par exemple dans le brevet EP 330 963. Par contre, le coût élevé des agents de réticulation utilisables ainsi que la difficulté de maîtriser les conditions de réticulation ont empêché cette technique de se développer de manière industrielle.

Un procédé de fabrication de céramiques poreuses plus récent est décrit dans la demande de brevet EP 1 329 439 A1. Ce procédé comporte les étapes suivantes :
1) Préparation d'une suspension d'une poudre céramique dans un dispersant,
2) Préparation d'une solution contenant un biogel, encore appelé « hydrocolloïde », et maintenue à une température supérieure à la température de gélification de la solution,
3) Mélange de ladite suspension et de ladite solution, avec ajout d'un agent moussant, jusqu'à obtention d'une mousse, la température étant maintenue suffisamment élevée pour éviter la gélification du biogel,
4) Coulage de la mousse dans un moule,
5) Refroidissement jusqu'à gélification du biogel,
6) Séchage, calcination et frittage de la mousse obtenue.

L'utilisation d'un biogel pour consolider la mousse permet d'éviter les problèmes de toxicité évoqués précédemment. Cependant, il s'avère que si la mousse coulée dans le moule a une épaisseur supérieure à 60 mm, la mousse n'a pas une structure homogène. De plus, selon ce procédé, la quantité d'eau dans le mélange final est importante (45 à 50% en poids) ce qui entraîne des difficultés de séchage, en particulier pour les pièces de grandes dimensions. Il n'est donc pas possible de fabriquer des pièces céramiques poreuses de structure homogène et présentant de telles dimensions.

La demande de brevet français déposée par la Société Saint-Gobain Centre de Recherches et d'Etudes Européen sous le numéro FR 2 873 685 décrit un procédé amélioré permettant de fabriquer des pièces en mousse céramique poreuse, de densité homogène, ayant des dimensions supérieures ou égales à 60 mm.

A cet effet, FR 2 873 685 propose un procédé de fabrication d'une pièce céramique poreuse comprenant les étapes successives suivantes :
a) préparation d'un mélange M contenant une poudre céramique en suspension, au moins un agent gélifiant et au moins un agent moussant, à une température de mélange supérieure à la température de gélification dudit agent gélifiant,
b) cisaillement dudit mélange M à une température de moussage supérieure à ladite température de gélification, jusqu'à obtention d'une mousse,
c) gélification de ladite mousse par refroidissement dudit mélange M à une température inférieure à la température de gélification dudit agent gélifiant,
d) séchage de ladite mousse gélifiée de manière à obtenir une préforme,
e) frittage de ladite préforme de manière à obtenir une mousse céramique frittée.

Selon ce procédé, on ajoute audit mélange M un agent stabilisant dont la viscosité instantanée, en Pa.s, augmente d'au moins un facteur dix quand une vitesse de cisaillement dudit agent stabilisant diminue de 100 s⁻¹ à 0 s⁻¹.

Les inventeurs de l'invention décrite dans FR 2 873 685 ont observé que l'affaissement de la mousse lors de la mise en oeuvre du procédé selon EP 1 329 439 A1 se produit pendant une période critique s'étendant entre la fin de l'étape de cisaillement et le début de la gélification. Pendant cette période, l'agent gélifiant ne contribue sensiblement pas à la stabilisation structurelle de la mousse qui, pour des épaisseurs de plus de 60 mm, s'effondre sous son propre poids. Etant parvenus à identifier la cause de l'affaissement, ils ont proposé d'ajouter un agent stabilisant dans le mélange. L'agent stabilisant est choisi pour sa capacité à augmenter considérablement la viscosité du mélange dès que le cisaillement du mélange cesse, ce qui permet de rigidifier suffisamment la mousse pour éviter son effondrement jusqu'à ce que l'agent gélifiant se gélifie et puisse exercer sa fonction de stabilisation. Il devient ainsi possible de fabriquer des pièces en mousse céramique poreuse, de densité homogène, ayant des dimensions supérieures ou égales à 60 mm.

Le choix des poudres céramiques utilisées dans les différents procédés décrits ci-dessus est généralement guidé par les contraintes auxquelles sont soumises les mousses en service, en particulier par les contraintes de résistance mécanique ou de conductivité thermique.

Dans certaines applications, par exemple pour une utilisation comme support de catalyseur, on recherche également des surfaces disponibles les plus élevées possibles.

La demande de brevet français déposée par la Société Saint-Gobain Centre de Recherches et d'Etudes Européen sous le numéro FR 2 873 687 décrit un procédé amélioré permettant de fabriquer une mousse céramique cuite à parois poreuses présentant une porosité totale comprise entre 50 et 92 % (c'est-à-dire une densité comprise entre 8 et 50% de la densité théorique du matériau constituant ladite mousse) et une porosité intergranulaire d'au moins 5 %, de préférence d'au moins 8 %, de préférence encore d'au moins 10%.

A la différence des mousses céramiques connues avant le dépôt de FR 2 873 687, dont les parois cellulaires sont denses, la mousse céramique décrite dans FR 2 873 687 présente donc une porosité intergranulaire. Cette porosité intergranulaire développe considérablement la surface disponible sur les parois des cellules de la mousse.

De préférence, la mousse céramique cuite à parois poreuses décrite dans FR 2 873 687, ou « à porosité intergranulaire », présente encore une ou plusieurs des caractéristiques suivante :
- La taille des pores intergranulaires est en moyenne 10 à 100 fois plus petite que celle des pores cellulaires.
- De préférence, au moins une partie des cellules, de préférence toutes les cellules, sont délimitées par des parois au moins en partie, de préférence totalement, en carbure de silicium recristallisé. De préférence encore, la mousse céramique poreuse à porosité intergranulaire comporte au moins 95% en masse de carbure de silicium recristallisé. De préférence, la mousse céramique poreuse à porosité intergranulaire comporte plus de 98% en masse, de préférence encore sensiblement 100 % de carbure de silicium recristallisé.
- La mousse céramique poreuse présente une épaisseur supérieure à 60 mm.

FR 2 873 687 décrit encore un procédé de fabrication d'une mousse céramique poreuse à porosité intergranulaire. Ce procédé comprend les étapes successives suivantes :
a) préparation d'un mélange M contenant une poudre céramique en suspension, au moins un agent gélifiant et au moins un agent moussant, à une température de mélange supérieure à la température de gélification dudit agent gélifiant, le mélange M comportant du carbure de silicium,
b) cisaillement dudit mélange M à une température de moussage supérieure à ladite température de gélification, jusqu'à obtention d'une mousse,
c) gélification de ladite mousse par refroidissement dudit mélange M à une température inférieure à la température de gélification dudit agent gélifiant,
d) séchage de ladite mousse gélifiée de manière à obtenir une préforme,
e) cuisson de ladite préforme de manière à obtenir une mousse céramique poreuse dans des conditions permettant une consolidation par mécanisme d'évaporation-recristallisation dudit carbure de silicium.

Dans la suite de la description, on qualifie cette cuisson de « cuisson à haute température » ou d'« étape de recristallisation ». Cette cuisson conduit à la formation de carbure de silicium recristallisé.

De préférence, ce procédé présente encore une ou plusieurs des caractéristiques suivantes :
- De préférence, la poudre céramique utilisée à l'étape a) présente plus de 95% en poids de carbure de silicium.
- Les tailles de particules de la poudre céramique mise en oeuvre à l'étape a) sont distribuées selon une répartition bimodale. Par exemple, on peut utiliser une poudre formée à partir de deux sources de carbure de silicium présentant des diamètres médians différents.
- De préférence, la température de cuisson par traitement à haute température et tous les composants organiques utilisés sont déterminés de manière que tous lesdits composants organiques soient brûlés au cours de la cuisson.
- De préférence, on ajoute audit mélange M un agent stabilisant dont la viscosité instantanée, en Pa.s, augmente d'au moins un facteur dix quand une vitesse de cisaillement dudit agent stabilisant diminue de 100 s⁻¹ à 0 s⁻¹.
- La viscosité instantanée dudit agent stabilisant, en Pa.s, augmente d'au moins un facteur cent quand une vitesse de cisaillement dudit agent stabilisant diminue de 100 s⁻¹ à 0 s⁻¹. Avantageusement, l'effet sur la stabilisation de la mousse en est renforcé, ce qui permet de fabriquer des pièces poreuses d'épaisseurs supérieures à 90 mm.
- L'évolution de la viscosité dudit agent stabilisant en fonction de la vitesse de cisaillement dudit agent stabilisant est sensiblement réversible. Ainsi, dès que la vitesse de cisaillement du mélange M augmente, l'influence de l'agent stabilisant sur la viscosité du mélange diminue, et même peut devenir négligeable. Avantageusement, la présence de l'agent stabilisant ne conduit donc pas à une augmentation importante du besoin énergétique.
- A l'étape a), on prépare ledit mélange M à partir d'une barbotine céramique A, d'un pré-mélange B contenant au moins un agent gélifiant et un agent stabilisant et d'un pré-mélange C contenant au moins un agent moussant.
- On choisit ledit agent stabilisant de manière que, en fin d'étape c), la viscosité de ladite mousse soit supérieure à 1000 Pa.s à 20°C. De préférence, ledit agent stabilisant est un hydrocolloïde, de préférence d'origine végétale, de préférence encore choisi dans le groupe formé par le xanthane et le carraghénane ou un mélange de ceux-ci. L'agent stabilisant préféré est le xanthane. Avantageusement, les hydrocolloïdes d'origine végétales sont éliminés lors de l'étape de cuisson par traitement à haute température de la préforme, ce qui permet d'obtenir une pièce cuite d'une grande pureté.
- La teneur dudit agent stabilisant dans ledit mélange M est comprise entre 0,05 et 5% en poids, de préférence est comprise entre 0,1 et 1%, en poids.
- Ledit mélange M présente une teneur en eau inférieure à 40%, de préférence inférieure à 30 %, en pourcentage en poids.
- Ledit agent gélifiant est un hydrocolloïde d'origine animale ou végétale apte à gélifier de manière thermoréversible ladite composition après moussage. De préférence, ledit agent gélifiant est de la gélatine. Avantageusement, l'agent gélifiant est éliminé lors de l'étape de cuisson par traitement à haute température de la préforme, ce qui permet d'obtenir une mousse cuite d'une grande pureté. De préférence encore, la teneur en agent gélifiant dans le mélange M est comprise entre 1 et 10%, de préférence entre 1 et 6%, en poids.
- A l'étape a), on ajoute de préférence audit mélange M un agent plastifiant en une quantité en poids comprise entre 0,25 et 1 fois celle dudit agent gélifiant. De préférence encore, l'agent plastifiant est choisi pour brûler à une température supérieure à la température d'évaporation du liquide servant, à l'étape a), à mettre en suspension la poudre céramique, généralement de l'eau.

L'invention décrite dans FR 2 873 687, fournit ainsi une mousse céramique cuite poreuse qui présente, du fait de la structure spécifique des parois qui en délimitent les cellules, une surface exposée à l'environnement extérieur considérable. Cette nouvelle microstructure des parois cellulaires ouvre donc des perspectives de développement très larges.

Dans certaines applications, cette mousse présente cependant l'inconvénient d'une résistance mécanique trop limitée.

Il existe donc un besoin une mousse céramique poreuse du type de celle décrite dans FR 2 873 687 présentant une résistance mécanique améliorée.

Le but de la présente invention est de satisfaire ce besoin.

Selon l'invention, on atteint ce but au moyen d'une pièce céramique poreuse selon la revendication 1. Une telle pièce céramique comporte une mousse céramique poreuse présentant une porosité totale comprise entre 50 et 92 % et une porosité intergranulaire d'au moins 5 %, des parois d'au moins une partie des cellules de ladite mousse céramique étant imprégnées, au moins en partie, d'un matériau d'imprégnation.

Comme on le verra plus en détail dans la suite de la description, le matériau d'imprégnation bénéficie d'une surface d'accrochage élevée du fait de la présence de la porosité intergranulaire initiale de la mousse. La cohésion de la pièce selon l'invention en est donc améliorée.

Par « matériau d'imprégnation », on entend un matériau adhérent aux grains de la pièce céramique de manière à les solidariser entre eux. Dans un mode de réalisation préféré de l'invention, le matériau d'imprégnation pénètre au coeur desdites parois et bouche au moins partiellement, de préférence complètement, les pores intergranulaires desdites parois, constituant ainsi une matrice liant entre eux lesdits grains.

Avantageusement, la porosité intergranulaire permet au matériau d'imprégnation de pénétrer dans l'épaisseur des parois des cellules. Il peut ainsi renforcer considérablement la résistance mécanique de la mousse céramique sans modifier sensiblement la porosité cellulaire de la mousse.

Le matériau d'imprégnation bouchant au moins en partie les pores intergranulaires, la pièce selon l'invention est donc particulièrement avantageuse dans des applications où la porosité intergranulaire n'est pas essentielle, mais où on cherche à préserver un certain niveau de la porosité cellulaire.

De préférence, la mousse mise en oeuvre présente une ou plusieurs des caractéristiques préférées de la mousse décrite dans FR 2 873 687 et en particulier celles rappelées ci-dessus ou est fabriquée selon un procédé décrit dans FR 2 873 687 et présentant par exemple une ou plusieurs des caractéristiques préférées rappelées ci-dessus.

De préférence encore, la pièce céramique selon l'invention présente encore une ou plusieurs des caractéristiques suivantes :
- Au moins les parois des cellules superficielles de la mousse céramique, c'est-à-dire exposées à l'environnement extérieur de la mousse, sont imprégnées, au moins en partie, du matériau d'imprégnation. De préférence, les parois de toutes les cellules de la mousse céramique sont imprégnées, au moins en partie, du du matériau d'imprégnation.
- Le matériau d'imprégnation est choisi parmi un métal, de préférence le silicium ou l'aluminium, un alliage métallique, un verre fondu, de préférence un verre sodocalcique ou un verre au bore, ou un composé organique thermoplastique, de préférence du type résine.
- Le matériau d'imprégnation ne bouche pas les fenêtres d'interconnexion entre les cellules de la mousse. De préférence, il ne bouche pas les ouvertures vers l'extérieur des cellules superficielles.
- La mousse imprégnée a une porosité totale supérieure à 50 %, de préférence supérieure à 70 % et/ou inférieure à 92 %.
- Le matériau d'imprégnation ne remplit pas les fenêtres d'interconnexion entre les cellules, et donc *a fortiori,* ne remplit pas les cellules de la mousse.
- La mousse céramique poreuse comporte au moins 95% en masse de carbure de silicium recristallisé. La « mousse céramique poreuse » doit être distinguée de la « pièce céramique poreuse » selon l'invention, qui comprend la mousse céramique poreuse et le matériau d'imprégnation.
- Avant imprégnation, la mousse céramique poreuse présente une porosité intergranulaire d'au moins 8 %, de préférence d'au moins 10 % et/ou la taille moyenne des pores intergranulaires de la mousse est supérieure à 8 µm, de préférence à 10 µm et/ou inférieure à 20 µm, de préférence à 15 µm. De préférence, la taille moyenne des pores cellulaires de la mousse est située entre 150 et 700 µm et, de préférence encore d'environ 350 µm.
- La pièce céramique poreuse présente un module de rupture en flexion supérieur à 2 MPa, de préférence à 3,5 MPa, et une porosité totale de préférence d'environ 75%.
- Le volume du matériau d'imprégnation dans la pièce céramique est sensiblement égal au volume des pores intergranulaires de la mousse avant imprégnation.

Une pièce céramique poreuse selon l'invention peut être fabriquée suivant un procédé comprenant une imprégnation, au moyen d'un matériau d'imprégnation, d'au moins une partie des parois des cellules d'une mousse céramique présentant une porosité totale comprise entre 50 et 92 % et une porosité intergranulaire d'au moins 5 %, le matériau d'imprégnation et la mousse céramique étant choisis de manière que la pièce céramique poreuse obtenue soit conforme à l'invention.

Dans une première variante du procédé, qualifiée par la suite de « voie 1 », l'imprégnation est effectuée sur la mousse céramique poreuse, c'est-à-dire après l'étape de cuisson. Le matériau d'imprégnation est mis en contact, sous forme de poudre, avec la mousse, et l'ensemble est chauffé jusqu'à fusion du matériau d'imprégnation. Le matériau d'imprégnation sous forme liquide pénètre alors au sein des parois, et ainsi « imprègne » ces parois.

De préférence, la mise en contact du matériau d'imprégnation en poudre et de la préforme résulte de l'application de cette poudre sur les surfaces supérieure et inférieure de la préforme. Il est également possible de « trempeur », au moins partiellement, la mousse dans le matériau d'imprégnation en poudre ou de pulvériser ledit matériau d'imprégnation sur la mousse.

Après imprégnation, le matériau d'imprégnation durcit, par exemple du fait de son refroidissement ou est durci par un traitement approprié. On obtient alors une pièce céramique poreuse selon l'invention.

De préférence, le matériau d'imprégnation et la mousse céramique sont choisis de manière à obtenir une pièce céramique poreuse selon l'invention.

De préférence encore, la pénétration du matériau d'imprégnation liquide au sein des parois se fait par capillarité.

Dans le cas de mousses fabriquées selon le procédé décrit dans FR 2 873 687, la résistance mécanique est inférieure à 15 MPa, ce qui rend impossible tout imprégnation par coulage sous pression. Une pénétration du matériau d'imprégnation par capillarité est alors particulièrement avantageuse.

Dans le cas d'une mousse céramique poreuse à base de carbure de silicium recristallisé, le procédé pour fabriquer la mousse céramique poreuse présentant une porosité totale comprise entre 50 et 92 % et une porosité intergranulaire d'au moins 5 %, est de préférence conforme au procédé décrit dans FR 2 873 687 et comporte une, et de préférence plusieurs des caractéristiques préférées de ce procédé rappelées ci-dessus.

En outre, de préférence, le mélange M préparé à l'étape a) comporte une quantité d'eau supérieure à 15 %, de préférence supérieure à 20 % et/ou inférieure à 50 %, de préférence inférieure à 40 %, en pourcentages massiques sur la base du poids du mélange.

De préférence, le mélange M ne comporte pas de thermodurcisseur.

En outre, de préférence, on ajoute alors de la silice au mélange M, de préférence en une quantité supérieure ou égale à 2 % en poids sur la base du mélange M. Avantageusement, la silice favorise la recristallisation. De manière préférée, les tailles de particules de la poudre céramique mise en oeuvre pour préparer le mélange M sont distribuées selon une répartition bimodale ou, de préférence encore trimodale.

Les inventeurs ont également développé un nouveau procédé, qualifié par la suite de « voie 2 », permettant de fabriquer des pièces céramiques selon l'invention. Ce procédé présente plusieurs variantes, appelées « voie 2a » et « voie 2b », décrites plus en détail ci-dessous.

Le nouveau procédé de fabrication comprend les étapes a) à e) du procédé de FR 2 873 687 décrites ci-dessus.

A l'étape d), le séchage peut être effectué à température ambiante et/ou sous étuve à une température comprise entre 20 et 120 °C.

Selon la voie 2a, ce procédé est remarquable en ce que, après l'étape d), on dispose, en contact avec ladite préforme, un matériau d'imprégnation sous forme de poudre.

Selon la voie 2b, ce procédé est remarquable en ce que, à l'étape a), on ajoute au mélange M un matériau d'imprégnation sous forme de poudre.

Avantageusement, le procédé selon la voie 2 est plus rapide que le précédent, l'imprégnation et la recristallisation étant simultanées.

De préférence, suivant la voie 2a, avant l'étape d), on dépose du matériau d'imprégnation, de préférence du silicium métal en poudre, en contact avec ladite préforme, de préférence, en contact avec les surfaces supérieure et inférieure de ladite préforme. Pendant le traitement thermique à l'étape e), il se produit simultanément une imprégnation des pores intergranulaires par le matériau d'imprégnation fondu et une recristallisation du carbure de silicium.

Selon la voie 2b, on introduit de préférence du silicium en poudre dans le mélange M, à l'étape a). De préférence, on utilise un grade compris entre 0,05 mm et 2 mm, de préférence entre 0,2 mm et 2 mm.

De préférence encore, on ajoute également du carbone au mélange M, à l'étape a). Pour le carbone, on utilise de préférence du Carbon black (< 1 micron) ou du graphite (taille de grains entre 5 et 15 microns).

Hormis les différences ci-dessus, ce procédé de fabrication est de préférence conforme au procédé décrit dans FR 2 873 687 et comporte une et de préférence plusieurs des caractéristiques préférées de ce procédé rappelées ci-dessus.

L'invention concerne enfin l'utilisation d'une pièce céramique poreuse selon l'invention ou d'une pièce céramique poreuse fabriquée au moyen d'un procédé selon l'invention, pour des supports de catalyse, pour la filtration de liquides ou de gaz chauds, comme diffuseur (pièce chauffée laissant passer le mélange air/gaz nécessaire à la combustion) dans un brûleur à gaz, dans un récepteur volumétrique solaire, en anglais « solar volumetric receiver », ou comme pièce de gazetterie (supports de cuisson).

D'autres caractéristiques et avantages de la présente invention apparaîtront à la lecture de la description qui va suivre et à l'examen du dessin annexé dans lequel
- les figures 1 (1a à 1e) montrent, à différents grossissements, des images obtenues au microscope optique sur des échantillons pris à 10 à 20 mm de la surface de pièces selon l'invention fabriquées selon la voie 1, le matériau d'imprégnation étant du silicium ;
- les figures 2a et 2b montrent, à différents grossissements, des images obtenues au microscope optique sur des échantillons pris à 10 à 20 mm de la surface de pièces selon l'invention fabriquées selon la voie 1, le matériau d'imprégnation étant du verre ;
- les figures 3 et 4 montrent, à différents grossissements, des images obtenues au microscope optique sur des échantillons pris à 10 à 20 mm de la surface de pièces selon l'invention fabriquées selon la voie 2a, le matériau d'imprégnation étant du silicium ;
- les figures 5 et 6 sont des graphiques mettant en évidence des comportements rhéologiques de différents pré-mélanges B décrits ci-dessous ;
- les figures 7 à 9 montrent, à différents grossissements, des images obtenues au Microscope Electronique à Balayage sur des échantillons pris à 10 à 20 mm de la surface de mousses cuites décrites dans FR 2 873 687 et correspondant à l'exemple 21 décrit ci-dessous.

Dans les différentes figures, des références identiques sont utilisées pour désigner des objets identiques ou analogues.

La recristallisation est un phénomène bien connu correspondant à une consolidation par évaporation des plus petits grains de carbure de silicium puis condensation pour former les liens entre les plus gros grains.

Par « carbure de silicium recristallisé », on entend du carbure de silicium recristallisé pendant l'étape de cuisson par traitement à haute température de la mousse céramique.

On appelle « taille d'un pore » sa dimension maximale. Dans les produits de l'invention, les pores ont une forme quasi-sphérique et la taille est dans ce cas le diamètre. La taille des pores se mesure par analyse d'images de la surface des mousses cuites.

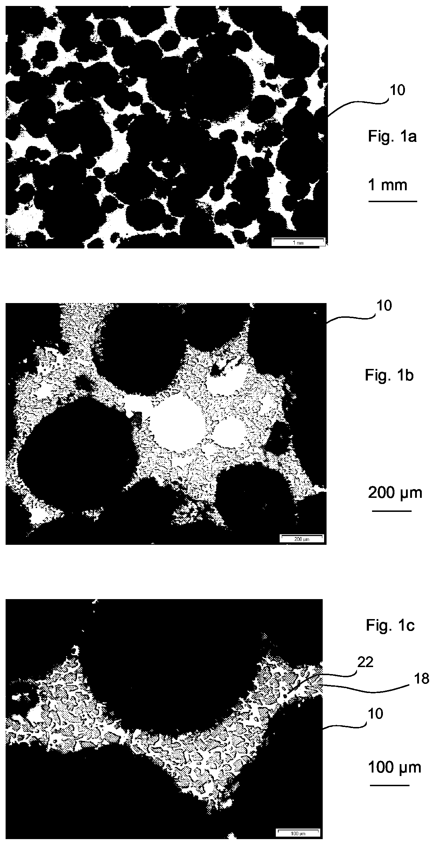

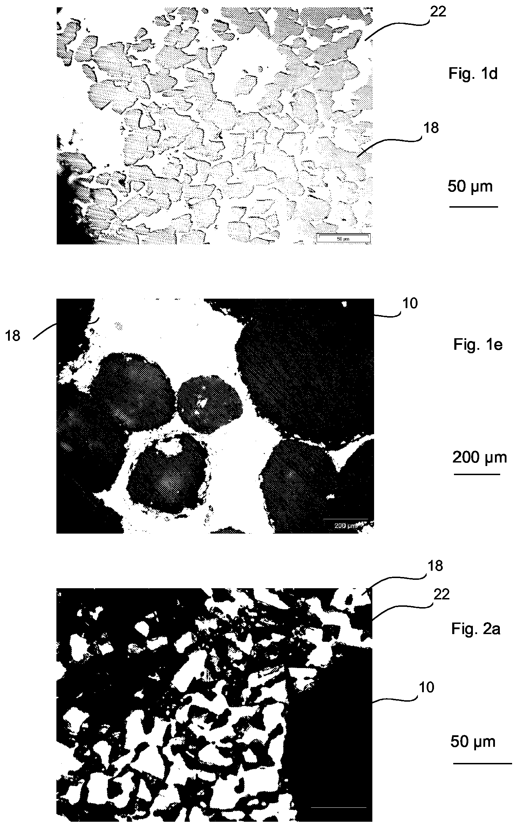

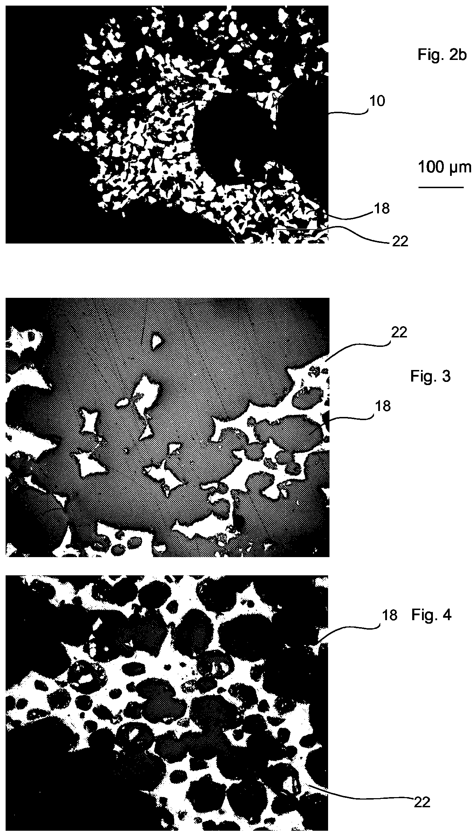

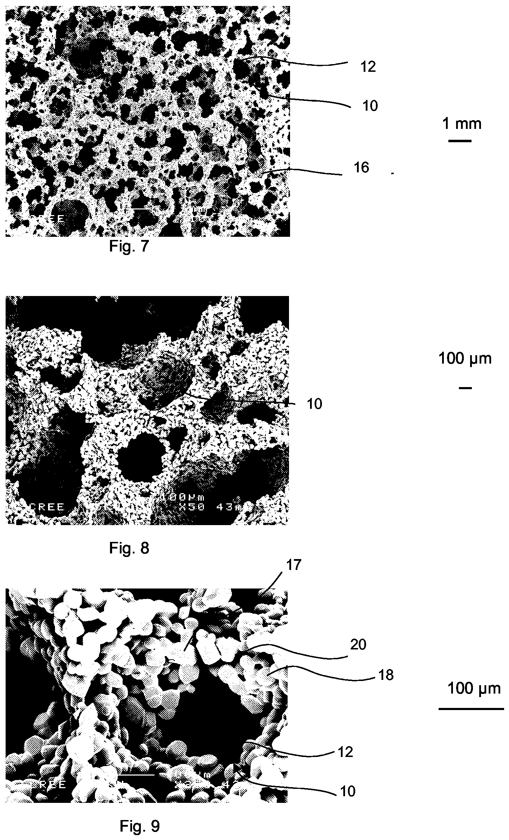

On décrit à présent un procédé pouvant être mis en oeuvre pour fabriquer les mousses céramiques représentées sur les figures 1 à 4 et 7 à 9.

Ce procédé comporte les étapes successives suivantes :
a) préparation d'un mélange M contenant une poudre céramique en suspension, au moins un agent gélifiant et au moins un agent moussant, à une température de mélange supérieure à la température de gélification dudit agent gélifiant,
b) cisaillement dudit mélange M à une température de moussage supérieure à ladite température de gélification, jusqu'à obtention d'une mousse,
c) gélification de ladite mousse par refroidissement dudit mélange M à une température inférieure à la température de gélification dudit agent gélifiant,
d) séchage de ladite mousse gélifiée de manière à obtenir une préforme,
e) cuisson par traitement à haute température de ladite préforme de manière à obtenir une mousse céramique poreuse.

Dans la première étape a) de ce procédé de fabrication, on prépare un mélange contenant une poudre céramique en suspension, de préférence dans de l'eau, au moins un agent gélifiant et au moins un agent moussant. En outre, on ajoute de préférence audit mélange M un agent stabilisant.

On procède de préférence de la manière suivante.

On prépare d'abord,
- une barbotine A par dispersion de la poudre céramique et d'un dispersant dans de l'eau, selon une technique classique,
- un pré-mélange B par dissolution des agents gélifiant et stabilisant dans de l'eau, à une température supérieure à la température de gélification de l'agent gélifiant,
- un pré-mélange C par solubilisation d'un agent moussant dans de l'eau.

La quantité de poudre céramique dans la barbotine A est de préférence comprise entre 50 et 90 % en poids, de préférence entre 70 et 85% en poids, de la barbotine A. De préférence, le mélange M contient de 50 à 80%, de préférence de 60 à 70%, en poids de particules céramiques.

La nature de la poudre céramique est adaptée en fonction de la mousse céramique à fabriquer.

Dans le cas de la fabrication de mousse en carbure de silicium recristallisé, la poudre est une poudre de carbure de silicium dont la distribution granulométrique est de préférence bimodale ou trimodale. Le premier mode est de préférence inférieur à 5 µm, de préférence encore inférieur à 3 µm, de préférence toujours inférieur à 1 µm, et le second mode est de préférence supérieur à 10 µm, de préférence supérieur à 20 µm. Le troisième mode est un mode intermédiaire entre les premier et second modes. La taille des grains est de préférence comprise entre 0,5 et 10 microns avec une taille moyenne égale à 2,5 µm. Une telle distribution granulométrique permet avantageusement d'obtenir une mousse céramique présentant une porosité intergranulaire particulièrement développée.

Pour les mousses représentées sur les figures 1 à 4 et 7 à 9, la poudre céramique utilisée à l'étape a) est une poudre comportant plus de 95% en poids de carbure de silicium.

Le dispersant, optionnel, est par exemple un tensio-actif de type soude. Avantageusement, le dispersant permet d'ajuster le pH de manière à permettre une dispersion efficace du carbure de silicium.

L'agent gélifiant est de préférence un hydrocolloïde d'origine animale ou végétale apte à gélifier de manière thermoréversible ladite composition après moussage, par exemple de la gélatine, le carraghénane, ou un mélange de ceux-ci.

L'agent stabilisant peut être quelconque. De préférence, il présente la propriété de présenter une viscosité qui augmente d'au moins un facteur dix quand le gradient de la vitesse de son cisaillement diminue de 100 s⁻¹ à 0 s⁻¹. De préférence, l'agent stabilisant est choisi de manière que la viscosité du mélange M pendant le cisaillement, soit peu augmentée du fait de son incorporation dans ce mélange.

Avantageusement, il est ainsi possible d'utiliser les mélangeurs utilisés selon la technique antérieure sans avoir besoin d'augmenter la teneur en eau du mélange. L'augmentation de la teneur en eau entraînerait en effet des problèmes lors du séchage ultérieur.

De préférence, l'agent stabilisant est choisi pour être réversible. De préférence encore, on choisit l'agent stabilisant et l'agent gélifiant de manière que
- la viscosité de la mousse gélifiée soit supérieure ou égale à celle d'une mousse gélifiée obtenue à partir d'un mélange identique au mélange M mais qui ne contiendrait pas d'agent stabilisant, et
- la viscosité de la mousse obtenue entre les étapes b) et c) (avant gélification et après la fin de l'opération de moussage) soit supérieure ou égale à celle d'une mousse gélifiée obtenue à partir d'un mélange identique au mélange M mais qui ne contiendrait pas d'agent gélifiant.

De préférence on choisit l'agent stabilisant et l'agent gélifiant de manière qu'ils n'interagissent sensiblement pas l'un sur l'autre. Les associations de gélatine d'une part et de xanthane et/ou de carraghénane, de préférence de xanthane seul, sont préférées entre toutes.

Le xanthane et le carraghénane sont des gels physiques, c'est-à-dire présentant une structure réversible en réseau dans laquelle les liaisons sont formées par interaction physique (cristallisation, formation d'hélice, vitrification...). Par exemple, la molécule de xanthane se conforme sous forme de simple, double ou triple hélice qui interagit avec d'autres molécules pour former un réseau complexe. En solution dans l'eau des agrégats à liaisons faibles se forment. Ces agrégats peuvent être dissociées par l'action de cisaillement.

De préférence, au moins un agent plastifiant, de préférence se présentant sous forme liquide à la température de préparation du mélange M, de préférence un polyol, de préférence encore le glycérol, est ajouté au pré-mélange B. L'agent plastifiant est choisi pour présenter une bonne compatibilité avec l'agent gélifiant, c'est-à-dire une capacité à rester à l'intérieur du mélange M et à résister ainsi à la migration et aux solvants, sans pour autant provoquer de séparation de phases. De préférence la teneur en agent plastifiant est comprise entre 0,25 et 1 fois celle de l'agent gélifiant.

L'agent moussant, de préférence un savon, est de préférence ajouté dans le pré-mélange C en une proportion comprise entre 55 et 75% en poids dudit pré-mélange. De préférence encore, la quantité d'agent moussant est déterminée de manière que sa teneur dans le mélange M soit comprise entre 1 et 5% en poids.

Le mélange M peut en outre contenir un ou plusieurs liants thermoplastiques temporaires usuellement utilisés en céramique.

La barbotine A et le pré-mélange C sont ensuite ajoutés au pré-mélange B sous agitation mécanique, la température, dite « température de mélange » étant maintenue supérieure à la température de gélification de l'agent gélifiant. De préférence, les pré-mélanges A, B et C sont mélangés immédiatement après leur préparation pour former le mélange M. L'agent stabilisant conduit à des solutions aqueuses présentant une viscosité stable dans la gamme de température utilisée.

Le pH du pré-mélange B peut être acide, basique ou neutre et est de préférence choisi de manière à permettre une bonne dispersion avec le pré-mélange A.

A l'étape b), le mélange M est cisaillé de manière à mousser. Le cisaillement peut résulter d'une agitation mécanique, d'une insufflation de gaz, ou bien par toute combinaison de ces deux techniques. Dans le cas de l'insufflation de gaz, on préfère utiliser une membrane munie de trous calibrés.

Pendant cette étape b), si la viscosité de l'agent stabilisant est réversible sous l'effet du cisaillement, le cisaillement réduit la viscosité du mélange.

L'étape b) s'effectue à une température supérieure à la température de gélification de l'agent gélifiant, par exemple à la température de mélange.

Après obtention de la mousse céramique, on arête le cisaillement, puis, éventuellement, on coule la mousse dans un moule.

La présence du stabilisant augmente immédiatement la viscosité du mélange du fait de la fin du cisaillement. L'agent stabilisant rigidifie donc la structure de la mousse alors même que la température reste supérieure à la température de gélification. Tout affaissement de la mousse sur elle-même avant l'étape de gélification est ainsi évité et il devient possible de fabriquer des mousses stables ayant une épaisseur de plus de 60 mm, et même de plus de 80 mm.

A l'étape c) on refroidit ou on laisse se refroidir la mousse jusqu'à une température inférieure à la température de gélification de l'agent gélifiant, de préférence jusqu'à température ambiante (10-25°C). La gélification permet avantageusement d'obtenir une mousse gélifiée suffisamment rigide pour être manipulée sans se dégrader. Le procédé se prête donc bien à une mise en oeuvre industrielle.

La mousse gélifiée est alors séchée à température ambiante, puis de préférence étuvée à une température de 100 à 120°C de manière à obtenir une préforme susceptible d'être cuite. La préforme, ou « cru », peut avantageusement avoir une épaisseur pouvant aller jusqu'à 80 mm, et même 150 mm.

La préforme peut être ensuite calcinée sous argon, à une température permettant d'obtenir du carbure de silicium recristallisé, à savoir 1800-2500°C.

D'autres conditions de cuisson par traitement à haute température sont envisageables, pourvu qu'elles conduisent à une recristallisation du carbure de silicium. Ces conditions sont bien connues de l'homme du métier.

Après étuvage et avant ou après cuisson par traitement à haute température, la mousse peut être usinée aux dimensions souhaitées.

La céramique poreuse obtenue par cuisson par traitement à haute température de la préforme est une mousse à structure ouverte et interconnectée. Elle présente avantageusement une densité après cuisson comprise entre 8 et 50% de la densité théorique du matériau (égale à 3,2 grammes par centimètres cube pour le carbure de silicium recristallisé), soit 50 à 92% de porosité.

La taille des pores cellulaires varie généralement entre 10 et 2000 µm.

La mousse présente une pluralité de cellules 10 (voir figures 1 à 4 et 7 à 9) connectées à d'autres cellules adjacentes par des fenêtres 12. Une cellule à la surface de la mousse céramique poreuse présente encore une ou plusieurs ouvertures 16 vers l'extérieur. On appelle « porosité d'interconnexion » la porosité créée par les fenêtres d'interconnexion 12 entre les cellules et par les ouvertures 16 des cellules superficielles (c'est-à-dire délimitant les faces extérieures du bloc de mousse).

Les parois céramiques de carbure de silicium recristallisé délimitant les cellules 10 sont poreuses. Elles sont en effet formées par agglomération de grains 18, cette agglomération laissant subsister des interstices 20, ou « pores intergranulaires », entre les grains 18.

Les grains 18 sont formés par les plus grosses particules de la poudre de carbure de silicium utilisée à l'étape a). La distribution granulométrique des grains 18 est donc sensiblement la même que celle de ces grosses particules.

Les parois 17 présentent ainsi une porosité dite « intergranulaire ». La porosité intergranulaire est donc constituée par les espaces interstitiels que crée nécessairement entre des grains l'agglomération de ces grains.

Comme décrit ci-dessus, la porosité d'interconnexion est créée par les « pores cellulaires », à savoir les fenêtres d'interconnexion 12 entre les cellules 10 et les ouvertures 16 vers l'extérieur des cellules superficielles. La porosité d'interconnexion est donc formée par des ouvertures dont les contours ne sont pas la conséquence nécessaire d'une agglomération de grains, mais résultent d'un agencement particulier de ces grains. A la différence de la porosité intergranulaire, elle permet une connexion directe (c'est-à-dire « en ligne droite ») entre les cellules adjacentes.

La porosité intergranulaire coexiste ainsi avec la « porosité d'interconnexion » entre les cellules de la mousse, la porosité totale étant la somme de la porosité d'interconnexion et de la porosité intergranulaire.

La taille moyenne des pores cellulaires se situe autour de 350 µm alors que la taille moyenne des pores intergranulaires est autour de 10 à 15 µm. La porosité totale de l'exemple 21 est de 86% (densité 0,43 g/cm³) et la porosité intergranulaire est d'environ 10%.

De préférence, la taille des pores intergranulaires est en moyenne 10 à 100 fois plus petite que celle des pores cellulaires. Il est également préférable que la taille moyenne des pores cellulaires soit située entre 150 et 700 µm, de préférence autour de 350µm, et/ou que la taille moyenne des pores intergranulaires soit située entre 10 et 15 µm.

La porosité intergranulaire peut être modifiée en fonction de la taille des grains de la poudre céramique, en particulier de carbure de silicium, utilisée.

La porosité d'interconnexion peut être modifiée en fonction de l'agent moussant mis en oeuvre, en particulier en fonction de sa quantité dans le mélange initial.

Selon l'invention, au moins une partie des pores intergranulaires sont remplis d'un matériau d'imprégnation 22. De préférence le matériau d'imprégnation est choisi parmi les métaux, en particulier le silicium et l'aluminium, les alliages métalliques, les verres fondus et les composés organiques thermoplastiques.

Tout procédé permettant ce « remplissage des pores intergranulaires », ou « imprégnation des parois cellulaires », est envisageable. Selon l'invention, il est préférable d'utiliser une des voies suivantes :
Selon la voie 1, on imprègne, au moins en partie, les parois cellulaires après l'étape e) de cuisson au cours de laquelle se produit la recristallisation du carbure de silicium.

Le matériau d'imprégnation, initialement sous forme de poudre, est disposé au-dessus et au-dessous de la mousse de céramique, en contact avec elle. La mousse et le matériau d'imprégnation sont alors chauffés à une température d'imprégnation à laquelle le matériau d'imprégnation est sous forme liquide et peut pénétrer dans les pores intergranulaires par capillarité.

De préférence, on ajuste les propriétés du matériau d'imprégnation et de la céramique poreuse à imprégner en fonction de la pénétration souhaitée. Ces propriétés à ajuster, évidentes pour l'homme du métier, comprennent en particulier la taille des pores intergranulaires, la viscosité du matériau d'imprégnation et le coefficient de mouillabilité de la mousse céramique. Cet ajustement peut se faire selon les techniques conventionnelles, connues de l'homme du métier. Etant donné que la taille des pores intergranulaires est en moyenne 10 à 100 fois plus petite que celle des pores cellulaires, seuls les pores intergranulaires seront remplis par capillarité avec la plupart des matériaux d'imprégnation.

Les plus petits pores cellulaires peuvent également être remplis par effet gravitaire.

Pour une imprégnation de silicium, la température d'imprégnation est de préférence comprise entre 1800 et 2000°C.

La voie 1 peut être utilisée pour imprégner les mousses avec n'importe quel matériau d'imprégnation pourvu que sa mouillabilité et que la viscosité du matériau d'imprégnation soient suffisantes à la température de traitement.

Bien que la voie 1 soit connue pour imprégner des mousses céramiques poreuses, elle est particulièrement bien adaptée pour l'imprégnation de mousses céramiques poreuses qui, comme selon l'invention, présentent une porosité intergranulaire d'au moins 5 %.

Elle présente cependant l'inconvénient de nécessiter une étape de fabrication supplémentaire qui, en outre, peut impliquer une consommation énergétique importante. Les inventeurs ont découvert un nouveau procédé selon lequel l'imprégnation est effectuée en même temps que le traitement de recristallisation (à 2200-2300°C).

Selon une première variante de ce procédé (voie 2a), on dépose du matériau d'imprégnation en poudre, de préférence du silicium métal, en contact avec la préforme avant de procéder à la cuisson. De préférence, on dispose ce matériau d'imprégnation sur le dessus et sur le dessous de la préforme.

L'ensemble subit alors la cuisson de recristallisation. Pendant cette étape, le matériau d'imprégnation fond et pénètre, par capillarité, au sein des parois cellulaires, à travers les pores intergranulaires. Simultanément, le carbure de silicium recristallise.

Selon une deuxième variante de ce procédé (voie 2b), on introduit du matériau d'imprégnation en poudre, de préférence du silicium métal, dans la barbotine de moussage, c'est-à-dire dans le mélange M. La taille des grains de silicium est de préférence comprise entre 0,2 et 2 mm.

De préférence, on ajoute également à la barbotine de moussage du carbone, de préférence entre 0,5 et 10% en poids, de préférence environ 1,5%. Le carbone se présente de préférence sous la forme de Carbon black (grain élémentaire <1 micron) ou de graphite (5 à 15 microns).

La présence de carbone permet de créer du carbure de silicium secondaire. Cela améliore les propriétés mécaniques finales mais également les propriétés mécaniques en cours de cuisson car le carbure de silicium secondaire est produit à basse température (1400 - 1500°C).

Pendant l'étape de cuisson ultérieure, le carbure de silicium se recristallise tandis que le matériau d'imprégnation fond et s'infiltre au sein des pores intergranulaires.

Lorsque le matériau d'imprégnation est du silicium métallique, une partie de ce dernier est consommée par le carbone pour faire du carbure de silicium secondaire. La quantité de silicium métallique est alors déterminée de manière qu'en dépit de cette consommation, il en reste suffisamment pour infiltrer les pores.

Bien entendu, les voies 1, 2a et 2b peuvent être combinées.

Quelle que soit la voie, de préférence, la quantité de matériau d'imprégnation en poudre est déterminée pour représenter un volume supérieur ou égal à au moins 1,05, de préférence 1,1, fois et, de préférence, inférieur à 1,2 fois, le volume des pores intergranulaires. Autrement dit, on utilise un excès de matériau d'imprégnation par rapport à la quantité strictement nécessaire pour remplir le volume des pores intergranulaires.

Les inventeurs ont cependant constaté que le matériau d'imprégnation en excès, en particulier le silicium, même en quantité importante, ne reste pas dans la pièce. On limite la quantité de matériau d'imprégnation en poudre à moins de 1,2 fois le volume des pores intergranulaires pour des raisons économiques.

La présence d'une double porosité réglable, en particulier pour les mousses céramiques à base de carbure de silicium recristallisé, est particulièrement avantageuse.

La présence de la porosité intergranulaire confère en effet à la fois une très grande surface disponible pour l'accrochage du matériau d'imprégnation et une possibilité d'insérer ce matériau d'imprégnation au sein des parois cellulaires, ce qui, avantageusement, évite une diminution sensible du volume des cellules. La perte de charge induite par la traversée d'une pièce selon l'invention est donc avantageusement limitée.

Les pièces céramiques selon l'invention sont donc efficaces pour la filtration, tout en présentant une résistance mécanique élevée.

La quantité contrôlée (de 5 à 15%, de préférence environ 10% vol de la pièce céramique obtenue) de matériau d'imprégnation permet en outre de conserver une faible densité et donc une faible inertie thermique. Les pièces céramiques selon l'invention résistent donc très bien aux fortes températures et sont donc bien adaptées pour servir de supports de cuisson. Les pièces céramiques selon l'invention mettant en oeuvre des mousses en carbure de silicium recristallisé sont particulièrement utiles dans cette application car elles peuvent résister à de très hautes températures. Du fait qu'elles conduisent efficacement la chaleur, résistent aux hautes températures et laissent passer l'air ou les gaz, les pièces céramiques selon l'invention mettant en oeuvre des mousses en carbure de silicium recristallisé sont également parfaitement adaptées pour former des diffuseurs de flamme dans des brûleurs infrarouge.

De préférence, la quantité de matériau d'imprégnation est contrôlée de manière à ne remplir que la porosité souhaitée. La pièce céramique selon l'invention peut présenter ainsi une porosité totale plus élevée que les mousses céramiques connues, et donc une grande surface disponible. Les pièces selon l'invention sont donc également très utiles comme supports de catalyseur.

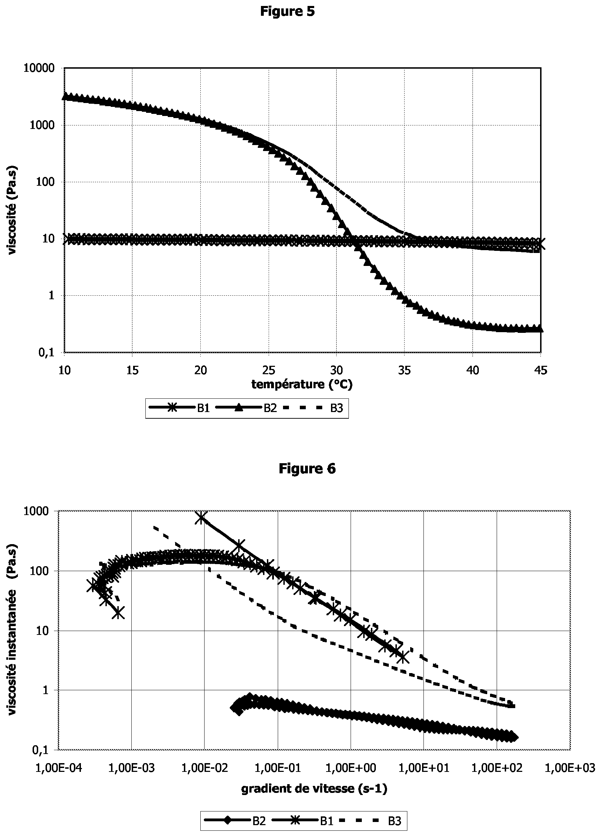

On se reporte à présent aux figures 5 et 6.

La figure 5 représente l'évolution de la viscosité de trois pré-mélanges B1, B2 et B3, fournis à titre d'exemples, utilisables pour fabriquer le mélange M.
- B1 contient 87% d'eau, 7,4% de glycérine, 4,8% d'alcool polyvinylique et 0,8% de xanthane.
- B2 contient 77,3% d'eau, 6,5% de glycérine, 4,2% d'alcool polyvinylique et 12% de gélatine.
- B3 contient 76,7% d'eau, 6,5% de glycérine, 4,2% d'alcool polyvinylique, 11,9% de gélatine et 0,7% de xanthane.

Ces pré-mélanges sont préparés à 80°C puis maintenus 3 heures à 40°C. On mesure ensuite la viscosité de ces mélanges, maintenus au repos, en fonction de leur température en baissant la température de 1 °C par minute, depuis 45°C (proche de la température d'élaboration du mélange M) jusqu'à 10°C. La mesure est effectuée avec un viscosimètre Bohlin® CVO 120 en cône plan (diamètre 40mm, angle 4°) en oscillation à 1 hertz avec une déformation de 0,01. Les résultats du test A sont présentés sur la figure 5.

La figure 5 montre que le xanthane seul (courbe B1) ne permet pas de faire varier la viscosité du mélange en fonction de la température. Le xanthane n'est donc pas un gel thermoréversible, à la différence de la gélatine (courbe B2). Le xanthane n'apparaît donc pas approprié pour faire varier la viscosité d'un mélange céramique en fonction de la température. Il apparaît donc en particulier peu approprié pour gélifier une mousse céramique lors de son refroidissement.

Il apparaît également sur la figure 5 que le xanthane ne permet pas, à lui seul, d'atteindre une viscosité importante susceptible de figer une mousse céramique. Au contraire, la gélatine permet d'atteindre, à température ambiante (10-25°C), des viscosités satisfaisantes, entre 200 et 500 fois supérieures à celles atteintes avec le xanthane seul.

Il apparaît enfin sur la figure 5 que la présence de xanthane n'entrave pas l'action gélifiante de la gélatine, l'effet du xanthane étant négligeable à des températures inférieures à 25 °C. L'association de xanthane et de gélatine n'a apparemment sensiblement aucun effet technique à des températures inférieures à 25 °C.

Sur la figure 6, les viscosités instantanées de B1, B2 et B3 à 45°C ont été représentées en fonction de ce gradient de vitesse (ou « vitesse de cisaillement »). Pour obtenir les résultats représentés sur la figure 6, on fait évoluer le gradient de vitesse de manière croissante, puis on attend 1 minute, puis on fait évoluer le gradient de vitesse de manière décroissante. Pendant toute la durée de l'essai, mené à une température de 45°C (proche de la température d'élaboration du mélange M), on mesure l'évolution de la viscosité. Les mesures sont effectuées avec un viscosimètre Bohlin® CVO 120 en cône plan (diamètre 40mm, angle 4°) en rotation.

On observe qu'en absence de xanthane, la viscosité de la gélatine n'évolue pas ou très peu en fonction du gradient de vitesse. En revanche, la viscosité instantanée du mélange de gélatine et de xanthane, comme celle du xanthane seul, diminue très fortement lorsque le cisaillement augmente et retrouve de très fortes valeurs lorsque le cisaillement diminue, et ce même à des teneurs faibles de xanthane.

On a également constaté qu'une augmentation ou une diminution de la viscosité d'un produit (gélatine, xanthane ou mélange de xanthane et de gélatine), suite à une évolution de la température ou de la vitesse de cisaillement conduit, dans les mêmes conditions de température et de cisaillement, à une amélioration ou une détérioration, respectivement, de la tenue structurelle de la mousse obtenue par cisaillement d'une composition réfractaire incorporant ce produit.

A la fin de l'étape de cisaillement b), le mélange de gélatine et de xanthane incorporé dans le mélange M conduit ainsi, suivant l'enseignement de la figure 6, à une amélioration immédiate de la tenue structurelle de la mousse dans des proportions très largement supérieures à celle que pourrait conférer la gélatine seule. La mousse est alors suffisamment rigide pour ne pas s'effondrer sur elle-même. Elle est d'une manipulation plus facile. Enfin l'action du mélange de xanthane et de gélatine évite une modification de la structure (coalescence des bulles d'air, ségrégation de la poudre céramique...) qui pourrait conduire à une hétérogénéité du produit et une fragilisation.

La température de la mousse baisse alors progressivement, ce qui permet, suivant l'enseignement de la figure 5, d'augmenter encore la tenue structurelle de la mousse dans des proportions très largement supérieures à celle que pourrait conférer le xanthane seul. La mousse est alors suffisamment rigide pour pouvoir être manipulée dans des conditions industrielles sans se détériorer.

Les actions de la gélatine et du xanthane se complètent donc parfaitement pour la mise en oeuvre du procédé selon l'invention, en particulier pour la fabrication de mousses de grandes dimensions.

Les exemples non limitatifs suivants sont donnés dans le but d'illustrer l'invention.

Dans les exemples qui suivent, les matières premières employées ont été choisies parmi :
- de la gélatine GPA A0, commercialisée par Wesardt International;
- du satiaxane™ CX90T, gomme de xanthane produite et commercialisée par SKW Biosystems;
- du RHODOVIOL® 4/125, alcool polyvinylique à faible taux d'hydrolyse (88mol%) commercialisé par Rhodia PPMC;
- de la glycérine, commercialisé par Moulet Peinture (Avignon - France);
- du Schäumungsmittel W53FL, dispersant à base de polyacrylate d'ammonium, commercialisé par Zschimmer & Schwarz GmbH.;
- du carbure de silicium SiC-1 dont le diamètre médian est situé autour de 0,6µm et contenant plus de 99,5% de SiC ;
- du carbure de silicium SiC-2 dont le diamètre médian est situé autour de 2,5µm et contenant plus de 99,5% de SiC ;
- du carbure de silicium SiC-3 dont le diamètre médian est situé autour de 23µm et contenant plus de 99,5% de carbure de silicium.

Dans tous les exemples suivants, le dispersant est toujours la soude, l'agent moussant toujours le W53FL, le plastifiant est la glycérine et le durcissant est le RHODOVIOL® 4/125.

La barbotine A est réalisée par dispersion de la poudre céramique et du dispersant dans de l'eau. La poudre céramique est un mélange de deux poudres de carbure de silicium suivant les proportions massiques suivantes :

| Exemple | 21 | 22 | 23 |
|---|---|---|---|
| SiC-1 (%) | 33 | | |
| SiC-2 (%) | | 66 | 67 |
| SiC-3 (%) | 67 | 34 | 33 |

0,45% de soude 1N ont joué le rôle du dispersant ; la barbotine avait ainsi un pH autour de 9.

Le pré-mélange B est réalisé, dans un bain marie à 55°C, par dissolution de gélatine GPA A0 et éventuellement de xanthane, de glycérine et de durcissant dans de l'eau.

Le pré-mélange C est réalisé par solubilisation de deux tiers (en poids) d'agent moussant solubilisé dans un tiers d'eau.

A et C sont ajoutés à B dans un bain marie à 55°C sous agitation mécanique constante pendant 20 minutes. Les proportions des constituants de A, B et C dans le mélange final M, hors poudre céramique, sont données dans le tableau 1. La mousse obtenue est coulée dans un moule à température ambiante, inférieure à 25°C. Le moule a des dimensions de 300mmx300mmx45mm. Elle est séchée 24 heures à température ambiante puis 24 heures à 35°C sous ventilation forcée pour obtenir la préforme.

Cette préforme est ensuite cuite sous argon pendant 3 heures à 2270°C pour obtenir du carbure de silicium recristallisé.

On peut remarquer que, lors de la cuisson par traitement à haute température le retrait dimensionnel est sensiblement nul et le même dans toutes les directions.

Certaines caractéristiques des mousses céramiques ainsi obtenues ont été reportées dans les tableaux 1 et 2.

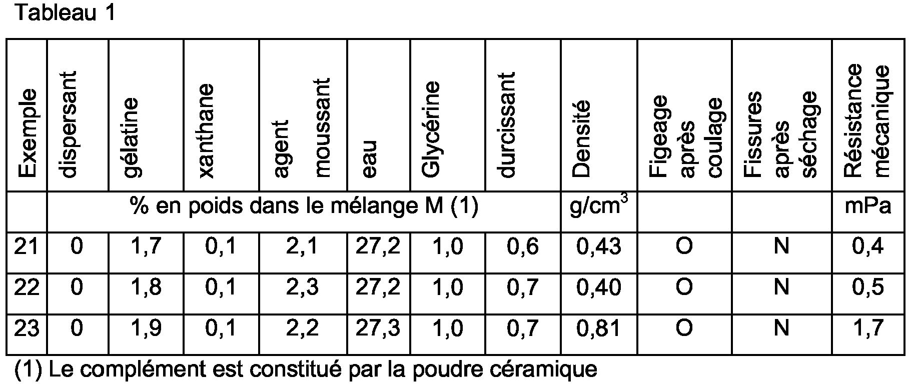

Après le coulage, on peut parfois constater un figeage immédiat dès que l'agitation et/ou la manipulation (coulage dans un moule) cesse. Par « figeage », on entend que la hauteur de la pièce coulée ne diminue pas et/ou ne varie pas selon les zones de la pièce coulée. Dans le tableau, « O » signifie que le figeage a été observé et « N » signifie que la structure de la mousse coulée a évolué après coulage (absence de figeage).

La présence de fissures est indiquée par « O » dans le tableau 1, « N » signifiant qu'il n'y a pas de fissure observée.

La densité est mesurée selon une méthode géométrique classique et exprimée en grammes par centimètres cube.

L'ajout d'un agent stabilisant permet de figer la structure obtenue par moussage mécanique. On obtient ainsi des pièces homogènes et aux dimensions souhaitées.

L'agent plastifiant permet d'obtenir des pièces plus souples et pour lesquelles le séchage n'induit pas la formation de fissures. Par ailleurs, de préférence, comme c'est le cas ici, l'agent plastifiant utilisé brûle à une température très supérieure à la température d'évaporation de l'eau. Ce composé va donc jouer son rôle même sur la pièce séchée et, lors de la cuisson, va permettre de garder une certaine humidité dans la pièce et éviter ainsi un séchage trop rapide et un effet de "croûte" sur le produit final. Cet effet favorable est particulièrement utile pour la fabrication de pièces de grandes dimensions.

Comme décrit ci-dessus, les mousses céramiques fabriquées selon le procédé décrit ci-dessus présentent une structure formée de cellules imbriquées, délimitées par des parois céramiques et connectées entre elles par des fenêtres. La taille des pores cellulaires est répartie de manière relativement homogène entre 10 et 200µm ; moins de 10% des pores cellulaires ont un diamètre inférieur à 10µm, 20 à 85% des pores cellulaires ont un diamètre inférieur à 300µm et 4 à 40% des pores cellulaires ont un diamètre supérieur à 450µm.

Les mousses se distinguent également des mousses connues à ce jour par une plage de tailles de pores cellulaires très étendue, l'absence d'une taille de pores cellulaires dominante et un plus faible nombre de pores cellulaires par unité de surface. On peut en effet compter en général moins de 1500 pores cellulaires par dm².

Par ailleurs, on observe que, lorsque la densité diminue, l'augmentation de porosité se fait par augmentation de la taille des pores cellulaires alors que leur nombre diminue. Plus de 15% des pores cellulaires, et parfois même au moins 30% des pores cellulaires, ont un diamètre supérieur à 300µm.

Au contraire, les mousses céramiques connues à ce jour présentent une taille de pores variant peu en fonction de la densité et généralement inférieure à 300µm pour 90% des pores ; la diminution de densité s'accompagne alors d'une augmentation du nombre de pores.

La présence de gros pores cellulaires des mousses du tableau 1 permet aussi d'obtenir des produits présentant une très faible perte de charge ce qui est particulièrement avantageux dans certaines applications, par exemple pour la filtration de gaz.

Ces mousses sont également remarquables en ce qu'elles présentent une pureté chimique très élevée. Cette pureté est liée à la pureté des matières premières céramiques utilisées puisque tous les composants organiques utilisés sont brûlés au cours de la cuisson par traitement à haute température.

Le tableau 2 suivant résume les résultats d'essais effectués sur les mousses des exemples 21 et 23 ci-dessus et sur une pièce selon l'invention, obtenue par imprégnation d'une mousse céramique selon l'exemple 21 ci-dessus.

La densité a été mesurée comme décrit précédemment. La porosité a été obtenue par calcul en comparant la densité du matériau à la densité théorique du carbure de silicium.

Le module de rupture MOR a été mesuré par flexion trois points sur des échantillons de taille 140x30x13mm.

**Tableau 2**

| | Mousse de l'exemple 21 | Mousse de l'exemple 23 | Mousse de l'exemple 21 imprégnée |
|---|---|---|---|
| Densité (g/cm³) | 0,44 | 0,80 | 0,70 |
| Porosité (%) | 86% | 75% | 75% |
| MOR (MPa) | 0,4 | 1,7 | 3,8 |

Le tableau 2 montre que la pièce selon l'invention obtenue par imprégnation d'une mousse selon l'exemple 21 présente une résistance à la rupture très largement supérieure à celle de cette mousse. La porosité de la pièce selon l'invention demeure cependant très élevée.

La porosité de la pièce selon l'invention est similaire à celle de la mousse de l'exemple 23, mais la pièce selon l'invention est avantageusement moins dense et plus résistante à la rupture.

Comme cela apparaît clairement à présent, l'invention fournit une pièce céramique poreuse qui présente à la fois une grande porosité et une résistance mécanique améliorée.

Bien entendu, la présente invention n'est pas limitée aux modes de réalisation décrits et représentés fournis à titre d'exemples illustratifs et non limitatifs.

En particulier, la mousse céramique à porosité intergranulaire mise en oeuvre se caractérise par une microstructure particulière, en particulier une porosité totale comprise entre 50 et 92 % et une porosité intergranulaire d'au moins 5 %. A la connaissance des inventeurs, une mousse céramique cuite présentant cette microstructure, notamment une mousse cuite en carbure de silicium recristallisée, n'est pas connue de l'état de la technique. Toute mousse céramique cuite présentant cette microstructure, indépendamment du procédé mis en oeuvre pour la fabriquer, pourrait être utilisée pour fabriquer la pièce selon l'invention.

Dans le mode de réalisation préféré de l'invention, cette microstructure résulte d'une recristallisation de carbure de silicium lors de l'étape de cuisson par traitement à haute température. D'autres matériaux céramiques sont cependant également envisageables.

## Revendications

1. Pièce céramique poreuse présentant une porosité totale supérieure à 70 % et comportant une mousse céramique poreuse et un matériau d'imprégnation, la mousse céramique poreuse présentant une porosité totale inférieure ou égale à 92 % et une porosité intergranulaire d'au moins 5 %, et le matériau d'imprégnation imprégnant, au moins en partie, des parois d'au moins une partie des cellules de ladite mousse céramique.

2. Pièce céramique poreuse selon la revendication 1, dans laquelle le matériau d'imprégnation est choisi parmi un métal, un alliage métallique, un verre fondu et un composé organique thermoplastique.

3. Pièce céramique poreuse selon la revendication 1, dans laquelle le matériau d'imprégnation est choisi parmi le silicium, l'aluminium, un verre sodocalcique, un verre au bore, et une résine thermoplastique.

4. Pièce céramique poreuse selon l'une quelconque des revendications précédentes, dans laquelle au moins une partie des cellules est délimitée par des parois au moins en partie en carbure de silicium recristallisé.

5. Pièce céramique poreuse selon l'une quelconque des revendications précédentes, dans laquelle la mousse céramique poreuse comporte au moins 95% en masse de carbure de silicium recristallisé.

6. Pièce céramique poreuse selon l'une quelconque des revendications précédentes, dans laquelle la taille moyenne des pores cellulaires de la mousse est située entre 150 et 700 µm.

7. Pièce céramique poreuse selon l'une quelconque des revendications précédentes, dans laquelle la mousse céramique poreuse présente une épaisseur supérieure à 60 mm.

8. Pièce céramique poreuse selon l'une quelconque des revendications précédentes, dans laquelle la quantité de matériau d'imprégnation est comprise entre 5 et 15 % en volume de la pièce céramique.

9. Procédé de fabrication d'une pièce céramique poreuse conforme à la revendication 4 ou conforme à l'une quelconque des revendications 5 à 8, lorsqu'elles dépendent de la revendication 4, procédé dans lequel ladite mousse céramique est fabriquée selon les étapes successives suivantes :
a) préparation d'un mélange M contenant une poudre céramique en suspension, au moins un agent gélifiant et au moins un agent moussant, à une température de mélange supérieure à la température de gélification dudit agent gélifiant,
b) cisaillement dudit mélange M à une température de moussage supérieure à ladite température de gélification, jusqu'à obtention d'une mousse,
c) gélification de ladite mousse par refroidissement dudit mélange M à une température inférieure à la température de gélification dudit agent gélifiant,
d) séchage de ladite mousse gélifiée de manière à obtenir une préforme,
e) cuisson de ladite préforme de manière à obtenir une mousse céramique poreuse,
le mélange M comportant du carbure de silicium et la cuisson à l'étape e) étant effectuée dans des conditions permettant une consolidation par mécanisme d'évaporation-recristallisation dudit carbure de silicium, procédédans lequel une imprégnation est effectuée après l'étape e), et/ou dans lequel, avant l'étape e), on dispose, en contact avec ladite préforme, un matériau d'imprégnation sous forme de poudre.

10. Procédé selon la revendication immédiatement précédente, dans lequel la mousse céramique poreuse est fabriquée à partir d'une poudre de carbure de silicium dont la distribution granulométrique est trimodale, le premier mode étant inférieur à 5 microns, le second mode étant supérieur à 10 microns et le troisième mode étant un mode intermédiaire entre les premier et second modes.

11. Procédé de fabrication selon l'une quelconque des revendications 9 à 10, dans lequel le matériau d'imprégnation est du silicium métal.

12. Procédé selon l'une quelconque des revendications 9 à 11, dans lequel on ajoute audit mélange M un agent stabilisant dont la viscosité instantanée, en Pa.s, augmente d'au moins un facteur dix quand une vitesse de cisaillement dudit agent stabilisant diminue de 100 s⁻¹ à 0 s⁻¹.

13. Procédé selon l'une quelconque des revendications 9 à 12, dans lequel on utilise un excès de matériau d'imprégnation par rapport à la quantité strictement nécessaire pour remplir le volume des pores intergranulaires, et/ou dans lequel la quantité de matériau d'imprégnation est inférieure à 1,2 fois le volume des pores intergranulaires.

14. Utilisation d'une pièce céramique poreuse selon l'une quelconque des revendications 1 à 8 ou d'une pièce céramique poreuse fabriquée au moyen d'un procédé selon l'une quelconque des revendications 9 à 13 pour des supports de catalyse, pour la filtration de liquides ou de gaz chauds, comme diffuseur dans un brûleur à gaz, dans un récepteur volumétrique solaire, comme pièce de gazetterie, ou comme support de cuisson.

## Patentansprüche

1. Poröses Keramikteil mit einer Gesamtporosität größer als 70%, und welches einen porösen keramischen Schaum und ein Imprägnationsmaterial aufweist, wobei der poröse keramische Schaum eine Gesamtporosität kleiner oder gleich 92% und eine Zwischenkornporosität von wenigstens 5% aufweist und das Imprägnationsmaterial wenigstens teilweise Wände eines Teils der Zellen des keramischen Schaums imprägniert.

2. Poröses Keramikteil nach Anspruch 1, in welchem das Imprägnationsmaterial aus einem Metall, einer metallischen Legierung, einem geschmolzenen Glas und einer organischen thermoplastischen Verbindung ausgewählt ist.

3. Poröses Keramikteil nach Anspruch 1, in welchem das Imprägnationsmaterial ausgewählt ist aus Silizium, Aluminium, einem Kalk-Natronglas, einem Borglas und einem thermoplastischen Harz.

4. Poröses Keramikteil nach einem der vorhergehenden Ansprüche, in welchem wenigstens ein Teil der Zellen durch Wände begrenzt ist, von denen wenigstens ein Teil aus rekristallisiertem Siliziumkarbid besteht.

5. Poröses Keramikteil nach einem der vorhergehenden Ansprüche, in welchem der poröse keramische Schaum wenigstens 95 Massenprozent an rekristallisiertem Siliziumkarbid aufweist.

6. Poröses Keramikteil nach einem der vorhergehenden Ansprüche, in welchem die mittlere Porengröße der Zellen des Schaums zwischen 150 und 700 µm liegt.

7. Poröses Keramikteil nach einem der vorhergehenden Ansprüche, in welchem der poröse keramische Schaum eine Dicke größer als 60 mm aufweist.

8. Poröses Keramikteil nach einem der vorhergehenden Ansprüche, in welchem die Menge Imprägnationsmaterial zwischen 5 und 15 % im Volumen des Keramikteils liegt.

9. Herstellungsprozess eines porösen Keramikteils gemäß dem Anspruch 4 oder gemäß einem der Ansprüche 5 bis 8 bei Abhängigkeit von Anspruch 4, wobei in dem Verfahren der keramische Schaum nach den folgenden aufeinanderfolgen Fabrikationsschritten hergestellt wird:
a) Zubereitung einer Mischung M, welche ein keramisches Pulver in Suspension enthält, wenigstens einen gelatinierenden Zusatz und wenigstens einen schäumenden Zusatz, bei einer Mischungstemperatur, die größer als die Gelatinierungstemperatur des gelatinierenden Zusatzes ist,
b) Zerschneiden der Mischung M bei einer Schaumtemperatur größer als die Gelatinierungstemperatur, bis zum Erhalt eines Schaumes,
c) Gelatinierung des Schaums durch Abkühlung der Mischung M auf eine Temperatur die kleiner ist als die Gelatinierungstemperatur des Gelatierungszusatzes,
d) Trocknung des gelatinierten Schaumes, um eine Vorform zu erhalten,
e) backen der Vorform um einen porösen keramischen Schaum zu erhalten,
wobei die Mischung M Siliziumkarbid enthält und das Backen in Schritt e) bewirkt wird in Konditionen, die eine Konsolidation durch Verdampfung-Rekristallisationsmechanismen des Siliziumkarbids erlauben, ein Verfahren, in welchem eine Imprägnation nach Schritt e) bewirkt wird, und/oder in welchem, vor Schritt e) in Kontakt mit der Vorform ein Imprägnationsmaterial in Pulverform zugegeben wird.

10. Verfahren nach dem unmittelbar vorhergehenden Anspruch, in welchem der poröse keramische Schaum von einem Pulver von Siliziumkarbid ausgehend hergestellt wird, dessen granulometrische Verteilung trimodal ist, wobei die erste Mode kleiner als 5 µm, die zweite Mode größer als 10 µm und die dritte Mode eine Mode zwischen den ersten und zweiten Moden ist.

11. Herstellungsverfahren nach einem der Ansprüche 9 bis 10, in welchem das Imprägnationsmaterial metallisches Silizium ist.

12. Verfahren nach einem der Ansprüche 9 bis 11, in welchem man der Mischung M einen Stabilisierungszusatz zugibt, dessen Momentanviskosität in Pa.s mindestens durch einen Faktor 10 vergrößert wird, wenn die Zerschneidegeschwindigkeit des stabilisierenden Zusatzes von 100 s⁻¹ auf 0 s⁻¹ vermindert wird.

13. Verfahren nach einem der Ansprüche 9 bis 12, in welchem man ein Übermaß an Imprägnationsmaterial im Vergleich zur eigentlich notwendigen Menge verwendet, um das Volumen der Zwischenkornporen zu füllen, und/oder in welchem die Menge an Imprägnationsmaterial größer als 1,2 mal dem Volumen der Zwischenkornporen liegt.

14. Verwendung eines porösen Keramikteils nach einem der Ansprüche 1 bis 8 oder eines porösen Keramikteils, welches mittels eines Verfahrens nach einem der Ansprüche 9 bis 13 hergestellt ist für Katalysegestelle, für die Filtration von Flüssigkeiten oder heißen Gasen, als Verteiler in einem Gasbrenner, in einem volumetrischen Solarreceiver, als Chargenbehälterteile oder als Backhalterung.

## Claims

1. A porous ceramic part having a total porosity greater than 70% and comprising a porous ceramic foam and an impregnation material, the porous ceramic foam having a total porosity of 92% or less and an intergranular porosity of at least 5%, walls of at least some of the cells of said ceramic foam being at least partly impregnated with the impregnation material.

2. The porous ceramic part according to claim 1, wherein the impregnation material is selected from a metal, a metal alloy, a molten glass and a thermoplastic organic compound.

3. The porous ceramic part according to claim 1, wherein the impregnation material is selected from silicon, aluminium, a soda-lime glass, a boron glass, and a thermoplastic resin.

4. The porous ceramic part according to any one of the preceding claims, wherein at least a part of the cells is delimited by recristallized silicon carbide walls, at least partly.

5. The porous ceramic part according to any one of the preceding claims, wherein the porous ceramic foam comprises at least 95% in mass of recristallized silicon carbide.

6. The porous ceramic part according to any one of the preceding claims, wherein the average size of the cellular pores of the foam is between 150 and 700 µm.

7. The porous ceramic part according to any one of the preceding claims, wherein the porous ceramic foam has a thickness greater than 60 mm.

8. The porous ceramic part according to any one of the preceding claims, wherein the quantity of impregnation material is between 5 and 15% in volume of the ceramic part.

9. A method for manufacturing a porous ceramic part according to claim 4, or according to any one of claims 5 to 8, when they depend on claim 4, wherein said ceramic foam is manufactured according to the following successive steps:
a) preparation of a mixture M containing a suspended ceramic powder, at least one gelling agent and at least one foaming agent, at a mixing temperature higher than the gelling temperature of said gelling agent,
b) shearing of said mixture M at a foaming temperature higher than said gelling temperature, until a foam is obtained,
c) gelling of said foam by cooling said mixture M at a temperature lower than the gelling temperature of said gelling agent,
d) drying of said gelled foam such as to obtain a preform,
e) curing of said preform such as to obtain a porous ceramic foam,
the mixture M comprising silicon carbide, and the curing at step e) being carried out under conditions allowing a consolidation by means of an evaporation-recrystallization mechanism of said silicon carbide, wherein an impregnation is carried out after step e) and/or wherein, before step e), an impregnation material in the form of powder is put into contact with said preform.

10. The method according to the immediately preceding claim, wherein the porous ceramic foam is manufactured from a silicon carbide powder with tri-modal granulometric distribution, the first mode being less than 5 microns, the second mode being greater than 10 microns and the third mode being an intermediate mode between the first and second modes.

11. The method of manufacture according to any one of claims 9 to 10, wherein the impregnation material is silicon metal.

12. The method according to any one of claims 9 to 11, wherein a stabilizing agent is added to said mixture M, whose instantaneous viscosity, in Pa.s, increases by at least a factor ten when a shearing speed of said stabilizing agent falls from 100s⁻¹ to 0s⁻¹.

13. The method according to any one of claims 9 to 12, wherein the quantity of impregnation material is less than 1.2 times the volume of the intergranular pores.

14. A use of a porous ceramic part according to any one of claims 1 to 8, or a porous ceramic part manufactured by means of a method according to any one claims 9 to 13 for catalyst supports, for liquid or hot gas filtration, as a diffuser in a gas-burner, in a solar volumetric receiver, as a saggar stack part, or as kiln furniture.
